(19) **Europäisches Patentamt**
**European Patent Office**
**Office européen des brevets**

(11) **EP 1 697 458 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(51) Int Cl.:
*C08L 33/12* *(2006.01)*          *C08L 25/12* *(2006.01)*
*C08L 51/00* *(2006.01)*

(21) Anmeldenummer: **04820435.8**

(22) Anmeldetag: **14.12.2004**

(86) Internationale Anmeldenummer:
**PCT/EP2004/014227**

(87) Internationale Veröffentlichungsnummer:
**WO 2005/059029 (30.06.2005 Gazette 2005/26)**

(54) **THERMOPLASTISCHE FORMMASSEN MIT VERBESSERTER CHEMIKALIENBESTÄNDIGKEIT**

THERMOPLASTIC MOULDING COMPOUNDS EXHIBITING IMPROVED CHEMICAL RESISTANCE

MATIERES MOULABLES THERMOPLASTIQUES A RESISTANCE AUX PRODUITS CHIMIQUES AMELIOREE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **16.12.2003 DE 10359358**

(43) Veröffentlichungstag der Anmeldung:
**06.09.2006 Patentblatt 2006/36**

(73) Patentinhaber: **BASF Aktiengesellschaft**
**67056 Ludwigshafen (DE)**

(72) Erfinder:
• **STORK, Martin**
  **68199 Mannheim (DE)**
• **WEBER, Martin**
  **67487 Maikammer (DE)**

• **GOTTSCHALK, Axel**
  **67435 Neustadt (DE)**
• **RIECHERS, Sven**
  **67346 Speyer (DE)**
• **GÜNTHERBERG, Norbert**
  **67346 Speyer (DE)**
• **FISCHER, Wolfgang**
  **69190 Walldorf (DE)**
• **LEBER, Ludger**
  **67125 Dannstadt-Schauernheim (DE)**
• **ITTEMANN, Peter**
  **68623 Lampertheim (DE)**
• **JÜNGLING, Stephan**
  **68157 Mannheim (DE)**

(56) Entgegenhaltungen:
**WO-A-97/08241**

**Beschreibung**

Die vorliegende Erfindung betrifft thermoplastische Formmassen, enthaltend eine Mischung aus

(A) 30 bis 69 Gew.-%, bezogen auf die Summe der Komponenten (A), (B) und (C), eines Methylmethacrylat-Polymerisates, erhältlich durch Polymerisation einer Mischung, bestehend aus

(A1) 90 bis 100 Gew.-%, bezogen auf (A), Methylmethacrylat, und

(A2) 0 bis 10 Gew.-%, bezogen auf (A), eines $C_1$-$C_8$-Alkylesters der Acrylsäure, und

(B) 30 bis 69 Gew.-%, bezogen auf die Summe der Komponenten (A), (B) und (C), eines Copolymerisates, erhältlich durch Polymerisation einer Mischung, bestehend aus

(B1) 75 bis 88 Gew.-%, bezogen auf (B), eines vinylaromatischen Monomeren und

(B2) 12 bis 25 Gew.-%, bezogen auf (B), eines Vinylcyanids

und

(C) 1 bis 40 Gew.-%, bezogen auf die Summe der Komponenten (A), (B) und (C), eines Pfropfcopolymerisates, erhältlich aus

(C1) 60 bis 90 Gew.-%, bezogen auf (C), eines Kerns, erhältlich durch Polymerisation eines Monomerengemisches, bestehend aus

(C11) 65 bis 90 Gew.-%, bezogen auf (C1), eines 1,3-Diens und

(C12) 10 bis 35 Gew.-% bezogen auf (C1), eines vinylaromatischen Monomeren

und

(C2) 5 bis 20 Gew.-%, bezogen auf (C), einer ersten Pfropfhülle, und

(C3) 5 bis 20 Gew.-%, bezogen auf (C), einer zweiten Pfropfhülle, erhältlich durch Polymerisation eines Monomerengemisches, bestehend aus

(C31) 70 bis 98 Gew.-%, bezogen auf (C3), eines $C_1$-$C_8$-Alkylesters der Methacrylsäure und

(C32) 2 bis 30 Gew.-%, bezogen auf (C3), eines $C_1$-$C_8$-Alkylesters der Acrylsäure,

und

(D) gegebenenfalls üblichen Zusatzstoffen in Mengen von bis zu 20 Gew.-%, bezogen auf die Summe der Komponenten (A), (B) und (C),

mit der Maßgabe, daß das Gewichtsverhältnis von (C2) zu (C3) im Bereich von 2:1 bis 1:2 liegt.

Weiterhin betrifft die vorliegende Erfindung ein Verfahren zur Herstellung der erfindungsgemäßen thermoplastischen Formmassen, deren Verwendung und die daraus erhältlichen Formkörper.

Aus WO 97/08241 sind Formmassen bekannt, die aus einem harten Methylmethacrylat-Polymerisat, einem harten Vinylaromat-Vinylcyanid-Polymerisat und einem weichen Pfropfcopolymerisat umfassend einen kautschukelastischen Pfropfkern, eine erste Pfropfhülle aus einem Vinylaromat-Alkylmethacrylat-Polymerisat und eine zweite Pfropfhülle aus einem Alkyl(meth)acrylat-Polymerisat, aufgebaut sind. Diese Formmassen zeichnen sich durch gute Schlagzähigkeit, hohe Fließfähigkeit, hohe Lichttransmission, geringen Streulichtanteil und geringen Kantengelbstich aus. Bezüglich ihrer chemischen und physikalischen Beständigkeit gegenüber dem Einfluß von Chemikalien oder Lösungsmitteln sind diese Formmassen für manche Anwendungsgebiete, beispielsweise zur Verwendung als Kosmetikverpakkungen, aber noch verbesserungswürdig.

Der vorliegenden Erfindung lag daher die Aufgabe zugrunde, thermoplastische Formmassen auf Basis harter Methylmethacrylat-Polymerisate, harter Vinylaromat-Vinylcyanid-Polymerisate und weicher Pfropfcopolymerisate zur Verfügung zu stellen, die bei vergleichbaren mechanischen, rheologischen und optischen Eigenschaften eine verbesserte Chemikalienbeständigkeit, beispielsweise Lösungsmittelbeständigkeit oder Wasseraufnahme, aufweisen.

Demgemäß wurden die eingangs definierten thermoplastischen Formmassen gefunden, wobei erfindungswesentlich ist, daß die erste Pfropfhülle (C2) erhältlich ist durch Polymerisation eines Monomerengemisches, bestehend aus

(C21) 30 bis 39 Gew.-%, bezogen auf (C2), eines vinylaromatischen Monomeren

(C22) 61 bis 70 Gew.-%, bezogen auf (C2), eines $C_1$-$C_8$-Alkylesters der Methacrylsäure und

(C23) 0 bis 3 Gew.-%, bezogen auf (C2), eines vernetzenden Monomeren.

Des weiteren wurde ein Verfahren zu deren Herstellung, ihre Verwendung zur Herstellung von Formkörpern sowie Formkörper, enthaltend die erfindungsgemäßen thermoplastischen Formmassen, gefunden.

Die erfindungsgemäßen thermoplastischen Formmassen, Verfahren, Verwendungen und Formkörper werden im folgenden beschrieben.

Die erfindungsgemäßen thermoplastischen Formmassen enthalten

(A) 30 bis 69 Gew.-%, vorzugsweise von 32,5 bis 57,5 Gew.-%, jeweils bezogen auf die Summe der Komponenten (A), (B) und (C), eines Methylmethacrylat-Polymerisates, erhältlich durch Polymerisation einer Mischung, bestehend aus

(A1) 90 bis 100 Gew.-%, vorzugsweise von 92 bis 98 Gew.-%, jeweils bezogen auf (A), Methylmethacrylat, und

(A2) 0 bis 10 Gew.-%, vorzugsweise von 2 bis 8 Gew.-%, jeweils bezogen auf (A), eines $C_1$-$C_8$-Alkylesters der Acrylsäure

(B) 30 bis 69 Gew.-%, vorzugsweise von 32,5 bis 57,5 Gew.-%, jeweils bezogen auf die Summe der Komponenten (A), (B) und (C), eines Copolymerisates, erhältlich durch Polymerisation einer Mischung, bestehend aus

(B1) 75 bis 88 Gew.-%, vorzugsweise von 79 bis 85 Gew.-%, jeweils bezogen auf (B), eines vinylaromatischen Monomeren und

(B2) 12 bis 25 Gew.-%, vorzugsweise von 15 bis 21 Gew.-%, jeweils bezogen auf (B), eines Vinylcyanids

und

(C) 1 bis 40 Gew.-%, vorzugsweise von 10 bis 35 Gew.-%, jeweils bezogen auf die Summe der Komponenten (A), (B) und (C), eines Pfropfcopolymerisates, erhältlich aus

(C1) 60 bis 90 Gew.-%, vorzugsweise von 70 bis 80 Gew.-%, jeweils bezogen auf (C), eines Kerns, erhältlich durch Polymerisation eines Monomerengemisches, bestehend aus

(C11) 65 bis 90 Gew.-%, vorzugsweise von 70 bis 85 Gew.-%, jeweils bezogen auf (C1), eines 1,3-Diens und

(C12) 10 bis 35 Gew.-%, vorzugsweise von 15 bis 30 Gew.-%, jeweils bezogen auf (C1), eines vinylaromatischen Monomeren

und

(C2) 5 bis 20 Gew.-%, vorzugsweise von 10 bis 15 Gew.-%, jeweils bezogen auf (C), einer ersten Pfropfhülle, erhältlich durch Polymerisation eines Monomerengemisches, bestehend aus

(C21) 30 bis 39 Gew.-%, vorzugsweise von 30 bis 35 Gew.-%, besonders bevorzugt von 31 bis 35 Gew.-%, jeweils bezogen auf (C2), eines vinylaromatischen Monomeren

(C22) 61 bis 70 Gew.-%, vorzugsweise von 63 bis 70 Gew.-%, besonders bevorzugt von 63 bis 68 Gew.-%, jeweils bezogen auf (C2), eines $C_1$-$C_8$-Alkylesters der Methacrylsäure und

(C23) 0 bis 3 Gew.-%, vorzugsweise von 0 bis 2 Gew.-%, besonders bevorzugt von 1 bis 2 Gew.-%, jeweils bezogen auf (C2), eines vernetzenden Monomeren

und

(C3) 5 bis 20 Gew.-%, vorzugsweise von 10 bis 15 Gew.-%, jeweils bezogen auf (C), einer zweiten Pfropfhülle, erhältlich durch Polymerisation eines Monomerengemisches, bestehend aus

(C31) 70 bis 98 Gew.-%, vorzugsweise von 75 bis 92 Gew.-%, jeweils bezogen auf (C3), eines $C_1$-$C_8$-Alkylesters der Methacrylsäure und

(C32) 2 bis 30 Gew.-%, vorzugsweise von 8 bis 25 Gew.-%, jeweils bezogen auf (C3), eines $C_1$-$C_8$-Alkylesters der Acrylsäure,

und

(D) gegebenenfalls üblichen Zusatzstoffen in Mengen von bis 20 Gew.-%, vorzugsweise von 0 bis 10 Gew.-%, jeweils bezogen auf die Summe der Komponenten (A), (B) und (C).

Die in den erfindungsgemäßen thermoplastischen Formmassen verwendeten Methylmethacrylat-Polymerisate (A) sind entweder Homopolymerisate aus Methylmethacrylat (MMA) oder Copolymerisate aus MMA mit bis zu 10 Gew.-%, bezogen auf (A), eines $C_1$-$C_8$-Alkylesters der Acrylsäure.

Als $C_1$-$C_8$-Alkylester der Acrylsäure (Komponente A2) kann man Methylacrylat, Ethylacrylat, Propylacrylat, n-Butylacrylat, n-Pentylacrylat, n-Hexylacrylat, n-Heptylacrylat, n-Octylacrylat und 2-Ethylhexylacrylat sowie Mischungen davon einsetzen, vorzugsweise Methylacrylat, Ethylacrylat, n-Butylacrylat, 2-Ethylhexylacrylat oder Mischungen davon, besonders bevorzugt Methylacrylat.

Die Methylmethacrylat-(MMA)-Polymerisate können durch Substanz-, Lösung- oder Perlpolymerisation nach bekannten Methoden hergestellt werden (siehe beispielsweise Kunststoff-Handbuch, Band IX, "Polymethacrylate", Vieweg/Esser, Carl-Hanser-Verlag 1975) und sind im Handel erhältlich. Bevorzugt setzt man Methylmethacrylat-Polymerisate ein, deren Gewichtsmittel-Werte $M_w$ der Molmassen im Bereich von 60.000 bis 300.000 g/mol liegen (bestimmt durch Lichtstreuung in Chloroform).

Die Komponente (B) ist ein Copolymerisat aus einem vinylaromatischen Monomeren (B1) und Vinylcyanid (B2).

Als vinylaromatische Monomere (Komponente B1) kann man Styrol, ein- bis dreifach mit $C_1$-$C_8$-Alkylresten substituiertes Styrol wie p-Methylstyrol oder tert.-Butylstyrol sowie α-Methylstyrol, bevorzugt Styrol, einsetzen.

Als Vinylcyanid (Komponente B2) kann man Acrylnitril und/oder Methacrylnitril, bevorzugt Acrylnitril, einsetzen.

Außerhalb des oben angegebenen Bereiches der Zusammensetzung der Komponente (B) erhält man üblicherweise bei Verarbeitungstemperaturen über 240˚C trübe Formmassen, die Schlieren aufweisen.

Die Copolymerisate (B) können nach bekannten Verfahren hergestellt werden, wie durch Substanz-, Lösungs-, Suspensions- oder Emulsions-Polymerisation, bevorzugt durch Lösungspolymerisation (siehe GB-A 14 72 195). Bevorzugt sind dabei Copolymerisate (B) mit Molmassen $M_w$ von 60.000 bis 300.000 g/mol, bestimmt durch Lichtstreuung in Dimethylformamid.

Als Komponente (C) wird ein Pfropfcopolymerisat verwendet, aus einem Kern (C1) und zweier darauf aufgebrachter Pfropfhüllen (C2) und (C3).

Der Kern (C1) stellt die Pfropfgrundlage dar und weist einen Quellungsindex QI von 15 bis 50, insbesondere von 20 bis 40 auf, bestimmt durch Quellungsmessung in Toluol bei Raumtemperatur.

Als 1,3-Dien (Komponente C11) des Kerns des Pfropfcopolymerisats (Komponente C1) kann man Butadien und/oder Isopren einsetzen.

Als vinylaromatisches Monomer (Komponente C12) kann man Styrol oder vorzugsweise am Kern mit einer, vorzugsweise in α-Stellung, oder auch mehreren $C_1$-$C_8$-Alkylgruppe(n), vorzugsweise Methyl, substituiertes Styrol einsetzen.

Bevorzugt weist der Kern des Pfropfcopolymerisats eine Glasübergangstemperatur von kleiner als 0˚C auf. Die mittlere Teilchengröße des Kerns liegt im Bereich von 30 bis 250 nm, besonders bevorzugt im Bereich von 50 bis 180 nm. Üblicherweise stellt man den Kern durch Emulsionspolymerisation her (siehe beispielsweise Encyclopedia of Polymer Science and Engineering, Vol. 1, S. 401 ff).

Auf den Kern (C1) wird die Pfropfhülle (C2) aufgebracht, welche die Monomere (C21), (C22) und gegebenenfalls (C23) enthält.

Als vinylaromatisches Monomer (Komponente C21) kann man Styrol oder vorzugsweise am Kern mit einer, vorzugsweise in α-Stellung, oder auch mehreren $C_1$-$C_8$-Alkylgruppe(n), vorzugsweise Methyl, substituiertes Styrol ein-

setzen.

Als $C_1$-$C_8$-Alkylester der Methacrylsäure (Komponente C22) verwendet man erfindungsgemäß Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als Monomere (C23) können übliche vernetzend wirkende Monomere eingesetzt werden, also im wesentlichen di -oder polyfunktionelle Comonomere, insbesondere Alkylenglykoldi(meth)acrylate wie Ethylen-, Propylen- und Butylenglykoldi(meth)acrylat, Allylmethacrylat, (Meth)acrylate von Glycerin, Trimethylolpropan, Pentaerythrit oder Vinylbenzole wie Di -oder Trivinylbenzol. Bevorzugt wird Butylenglykoldimethacrylat, Butylenglykoldiacrylat und Dihydrodicyclopentadienylacrylat in Form eines Isomerengemischs, besonders bevorzugt Dihydrodicyclopentadienylacrylat in Form eines Isomerengemischs, eingesetzt.

Auf die Pfropfhülle (C2) wiederum wird eine weitere Pfropfhülle (C3) aufgebracht, welche die Monomere (C31) und (C32) aufweist. Die Monomere (C31) sind $C_1$-$C_8$-Alkylester der Methacrylsäure, bei den Monomeren (C32) handelt es sich um $C_1$-$C_8$-Alkylester der Acrylsäure.

Als $C_1$-$C_8$-Alkylester der Methacrylsäure (Monomere C31) verwendet man erfindungsgemäß Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als $C_1$-$C_8$ Alkylester der Acrylsäure (Monomere C32) kann man Methylacrylat (MA), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei Methylacrylat besonders bevorzugt ist, sowie Mischungen dieser Monomere untereinander einsetzen.

Die Herstellung der beiden Pfropfhüllen (C2) und (C3) erfolgt in Gegenwart des Kerns (C1) nach literaturbekannten Methoden, insbesondere durch Emulsionspolymerisation (Encyclopedia of Polymer Science and Engineering, Vol. 1, Seite 401 ff.). Durch die dabei angewandte sogenannte Saatfahrweise werden bei der Herstellung der beiden Pfropfhüllen keine neuen Teilchen gebildet. Darüber hinaus ermöglicht es die Saatfahrweise die Zahl und die Art der Teilchen in beiden Pfropfstufen durch die Menge und die Art des eingesetzten Emulgators zu bestimmen. Die Emulsionspolymerisation wird üblicherweise durch Polymerisationsinitiatoren ausgelöst.

Bei der Emulsionspolymerisation können ionogene und nicht ionogene Emulgatoren verwendet werden.

Geeignete Emulgatoren sind beispielsweise Dioctylnatriumsulfosuccinat, Natriumlaurylsulfat, Natriumdodecylbenzolsulfonat, Alkylphenoxypolyethylensulfonate und Salze von langkettigen Carbon- und Sulfonsäuren.

Als nichtionogene Emulgatoren sind beispielsweise Fettalkoholpolyglykolether, Alkylarylpolyglykolether, Fettsäuremonoethanolamide sowie ethoxylierte Fettsäureamide und -amine geeignet.

Bezogen auf das Gesamtgewicht des Emulsionspfropfcopolymerisates liegt die Gesamtemulgatormenge vorzugsweise bei 0,05 bis 5 Gew.-%.

Als Polymerisationsinitiatoren können Ammonium- und Alkaliperoxodisulfate wie Kaliumperoxodisulfat sowie Initiatorkombinationssysteme wie Natriumpersulfat, Natriumhydrosulfit, Kaliumpersulfat, Natriumformaldehydsulfoxylat und Kaliumperoxodisulfat, Natriumdithionit-Eisen-II-sulfat verwendet werden, wobei die Polymerisationstemperatur im Fall der thermisch zu aktivierenden Ammonium- und Alkaliperoxodisulfate bei 50 bis 100°C und bei den Initiatorkombinationen, die als Redoxsysteme wirksam sind, darunter liegen kann, etwa im Bereich von 20 bis 50°C.

Die gesamte Initiatormenge liegt vorzugsweise zwischen 0,02 und 1,0 Gew.-%, bezogen auf das fertige Emulsionspolymerisat.

Sowohl bei der Herstellung der Grundstufe, d.h. des Kerns (C1), als auch bei der Herstellung der beiden Pfropfstufen, d.h. der beiden Pfropfhüllen (C2) und (C3), können ferner Polymerisationsregler eingesetzt werden. Als Polymerisationsregler dienen u.a. Alkylmercaptane wie beispielsweise n- oder tert. -Dodecylmercaptan. Die Polymerisationsregler werden üblicherweise in einer Menge von 0,01 bis 1,0 Gew.-%, bezogen auf die jeweilige Stufe, eingesetzt.

Im übrigen wird das erfindungsgemäß zu verwendende Emulsionspfropfcopolymerisat so hergestellt, daß man eine wäßrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann im Laufe von 15 bis 120 Minuten auf die Polymerisationstemperatur bringt. Anschließend wird bis zu einem Umsatz von mindestens 95 % polymerisiert. Monomere, Vernetzer, Emulgator, Initiator und Regler können auch komplett oder teilweise als Zulauf der wäßrigen Vorlage zugeführt werden.

Gegebenenfalls nach einer Nachreaktionszeit von 15 bis 120 Minuten werden die Stufen (C2) und (C3) unter Zulauf der Monomeren in Gegenwart der bereits gebildeten Stufe (C1) durch Emulsionspolymerisation erzeugt.

Die Isolierung des Emulsionspfropfcopolymerisates aus dem erhaltenen Latex erfolgt auf bekannte Weise durch Ausfällung, Filtration und anschließender Trocknung. Für die Ausfällung können beispielsweise wäßrige Lösungen von anorganischen Salzen wie Natriumchlorid, Natriumsulfat, Magnesiumsulfat und Calciumchlorid, wäßrige Lösungen von Salzen der Ameisensäure wie Magnesiumformiat, Calciumformiat und Zinkformiat, wäßrige Lösungen von anorganischen Säuren wie Schwefel- und Phosphorsäure sowie wäßrige ammoniakalische und aminische Lösungen sowie andere wäßrige alkalische Lösungen, z.B. von Natrium- und Kaliumhydroxid verwendet werden. Die Fällung kann aber auch durch physikalische Methoden, beispielsweise Gefrierfällung, Scherfällung, Dampffällung erfolgen.

Die Trocknung kann beispielsweise durch Gefrier-, Sprüh-, Wirbelschicht- und Umlufttrocknung erfolgen.

Das ausgefällte Emulsionspfropfcopolymerisat kann auch ohne Trocknung weiterverarbeitet werden.

Das Pfropfcopolymerisat (C) weist vorzugsweise einen Quellungsindex QI von 10 bis 40, insbesondere von 12 bis 35 auf. Der Quellungsindex wird dabei durch Quellungsmessung in Toluol bei Raumtemperatur bestimmt.

Als übliche Zusatzstoffe (D) kommen alle solchen Substanzen in Betracht, die sich in den Komponenten (A), (B) und (C) gut lösen, beziehungsweise mit diesen gut mischbar sind. Geeignete Zusatzstoffe sind u.a. Farbstoffe, Stabilisatoren, Schmiermittel und Antistatika.

Die Herstellung der erfindungsgemäßen Formmassen aus den Komponenten (A), (B), (C) und gewünschtenfalls (D) erfolgt nach dem Fachmann bekannten Verfahren, beispielsweise durch Mischen der Komponenten in der Schmelze mit dem Fachmann bekannten Vorrichtungen bei Temperaturen im Bereich von 200 bis 300°C, insbesondere bei 200 bis 280°C.

Die erfindungsgemäßen thermoplastischen Formmassen zeichnen sich ferner u.a. dadurch aus, daß das Gewichtsverhältnis der ersten Pfropfhülle (C2) zur zweiten Pfropfhülle (C3) im Bereich von 2:1 bis 1:2 liegt.

Die erfindungsgemäßen thermoplastischen Formmassen zeichnen sich in einer bevorzugten Ausführungsform dadurch aus, daß der Brechungsindex ($n_D$-$C_2$) der ersten Pfropfhülle (C2) größer als der Brechungsindex ($n_D$-$C_3$) der zweiten Pfropfhülle (C3) ist. Vorzugsweise ist der Brechungsindex ($n_D$-$C_2$) der ersten Pfropfhülle (C2) wenigstens um 2 %, insbesondere um wenigstens 3 %, größer als der Brechungsindex ($n_D$-$C_3$) der zweiten Pfropfhülle (C3).

In einer weiteren bevorzugten Ausführungsform sind die erfindungsgemäßen thermoplastischen Formmassen dadurch charakterisiert, daß der Brechungsindex ($n_D$-$C_2C_3$) der Gesamtpfropfhülle kleiner ist als der Brechungsindex ($n_D$-$C_1$) des Kerns (C1). Vorzugsweise ist der Brechungsindex ($n_D$-$C_2C_3$) der Gesamtpfropfhülle um wenigstens 0,1 %, insbesondere um wenigstens 1,0 % kleiner als der Brechungsindex ($n_D$-$C_1$) des Kerns (C1).

In einer weiteren bevorzugten Ausführungsform sind die erfindungsgemäßen thermoplastischen Formmassen dadurch charakterisiert, daß der Betrag der Differenz aus Brechungsindex ($n_D$-C) der Gesamtkomponente (C) und dem Brechungsindex ($n_D$-AB) der Gesamtmatrix der Komponenten (A) und (B) kleiner oder gleich 0,02, insbesondere kleiner oder gleich 0,015, ist.

In einer weiteren bevorzugten Ausführungsform sind die erfindungsgemäßen Formmassen darüber hinaus dadurch charakterisiert, daß der Betrag der Differenz zwischen dem Brechungsindex ($n_D$-$C_2C_3$) der Gesamtpfropfhülle des Pfropfcopolymerisats C und dem Brechungsindex ($n_D$-$C_1$) des Kerns (C1) kleiner als 0,06 ist. Die Formmassen gemäß dieser Ausführungsform zeichnen sich durch einen besonders niedrigen Kantengelbstich aus.

Die genannten Brechungsindices sind jeweils nach den im folgenden noch genannten Methoden (siehe Beispiele) zu bestimmen.

Aus den erfindungsgemäßen thermoplastischen Formmassen können hauptsächlich durch Spritzgießen oder durch Formblasen Formteile hergestellt werden. Die thermoplastischen Formmassen können aber auch verpreßt, kalandriert, extrudiert oder vakuumgeformt werden. Die erfindungsgemäßen thermoplastischen Formmassen zeichnen sich insbesonders durch gute mechanische, rheologische und optische Eigenschaften sowie eine verbesserte Chemikalienbeständigkeit, beispielsweise Lösungsmittelbeständigkeit oder Wasseraufnahme, aus.

Beispiele

In den nachfolgenden erfindungsgemäßen Beispielen und den Vergleichsbeispielen wurden jeweils thermoplastische Formmassen hergestellt und folgende Eigenschaften ermittelt:

Brechungsindex $n_D$ [dimensionslos]:

Die Brechungsindices ($n_D$-$C_1$), ($n_D$-C) und ($n_D$-AB) wurden an Folien gemessen, die aus den jeweiligen Polymerkernen (C1), Polymeren (C) oder Polymermischungen aus den Komponenten (A) und (B) in einer IWK-Presse bei 200°C und einem Druck von 3 - 5 bar 2 min vorgepresst und abschließend bei 200°C und 200 bar 3 min nachgepresst wurden. Die Messungen wurden bei 20°C mit einem Abbé-Refraktometer nach der Methode zur Messung der Brechungsindizes bei festen Körpern durchgeführt (s. Ullmanns Encyklopädie der technischen Chemie, Band 2/1, S. 486, Herausgeber E. Foerst; Urban & Schwarzenberg, München-Berlin 1961).

Der Brechungsindex ($n_D$-$C_2$) wurde inkrementell nach folgender Formel berechnet:

$$(n_D\text{–}C_2) = \sum_{i=1}^{n} [x_i^{C2} * (nD\text{-}M_i^{C2})] \Big/ \sum_{i=1}^{n} [x_i^{C2}]$$

wobei $x_i^{C2}$ die Gewichtsteile der die Pfropfhülle (C2) aufbauenden Monomerkomponente $M_i^{C2}$ sind, $(nD\text{-}M_i^{C2})$ das Brechungsindexinkrement der die Pfropfhülle (C2) aufbauenden Monomerkomponente $M_i^{C2}$ ist, und n die Anzahl voneinander verschiedener, die Pfropfhülle (C2) aufbauender Monomerkomponenten ist.

Der Brechungsindex $(n_D\text{-}C_3)$ wurde inkrementell nach folgender Formel berechnet:

$$(n_D\text{–}C_3) = \sum_{i=1}^{n} [x_i^{C3} * (nD\text{-}M_i^{C3})] \Big/ \sum_{i=1}^{n} [x_i^{C3}]$$

wobei $x_i^{C3}$ die Gewichtsteile der die Pfropfhülle (C3) aufbauenden Monomerkomponente $M_i^{C3}$ sind, $(nD\text{-}M_i^{C3})$ das Brechungsindexinkrement der die Pfropfhülle (C3) aufbauenden Monomerkomponente $M_i^{C3}$ ist, und n die Anzahl voneinander verschiedener, die Pfropfhülle (C3) aufbauender Monomerkomponenten ist.

Als Brechungsindexinkremente $(nD\text{-}M_i^{C2})$ bzw. $(nD\text{-}M_i^{C3})$ der die Pfropfhüllen (C2) bzw. (C3) aufbauenden Monomerkomponenten $M_i^{C2}$ bzw. $M_i^{C3}$ wurden folgende Werte eingesetzt:

| | |
|---|---|
| Styrol: | 1,594 |
| Methylmethacrylat: | 1,495 |
| Butylacrylat: | 1,419 |
| Dihydrodicyclopentadienylacrylat: | 1,497 |
| Butandioldiacrylat: | 1,419 |
| Butylenglykoldimethacrylat: | 1,419 |

Der Brechungsindex $(n_D\text{-}C_2C_3)$ der Gesamtpfropfhülle wurde nach folgender Formel berechnet:

$$(n_D\text{–}C_2C_3) = [y^{C2} * (n_D\text{-}C_2) + y^{C3} * (n_D\text{-}C_3)] / [y^{C2} + y^{C3}]$$

wobei $y^{C2}$ bzw. $y^{C3}$ die jeweiligen Gewichtsteile der die Gesamtpropfhülle aufbauenden ersten Pfropfhülle (C2) bzw. zweiten Pfropfhülle (C3) sind, und die Brechungsindices $(n_D\text{-}C_2)$ und $(n_D\text{-}C_3)$ wie oben beschrieben bestimmt wurden.

Quellungsindex QI [dimensionslos]:

Der Quellungsindex QI des Pfropfkernpolymerisats (C1) wurde an Folien gemessen, die durch Trocknen der bei der im folgenden noch beschriebenen Herstellung der Kautschukkerne (C1) anfallenden Dispersion bei 50˚C und 700-800 mbar über Nacht erhalten wurden.

Der Quellungsindex QI des Pfropfcopolymerisats (C) wurde an Folien gemessen, die aus den Pfropfcopolymerisaten (C) in einer IWK-Presse bei 200˚C und einem Druck von 3 - 5 bar 2 min vorgepresst und abschließend bei 200˚C und 200 bar 3 min nachgepresst wurden.

Ein Stück der jeweiligen Folien wurde mit Toluol versetzt. Nach 24 Stunden wurde dekantiert und die gequollene Folie gewogen. Die gequollene Folie wurde im Vakuum bei bis zu 120 ˚C bis zur Gewichtskonstanz getrocknet und wiederum gewogen. Der Quellungsindex ergibt sich als Quotient aus dem Gewicht der gequollenen Folie und dem Gewicht der getrockneten Folie.

Schlagzähigkeit $a_n$ [kJ/m$^2$]:

Die Schlagzähigkeit an wurde gemäß ISO 179-2/1eU bei 23˚C bestimmt.

Kerbschlagzähigkeit $a_k$ [kJ/m$^2$]:

Die Kerbschlagzähigkeit $a_k$ wurde gemäß ISO 179-2/1eA(F) bei 23˚C bestimmt.

Durchstoßfestigkeit DS [Nm]:

Die Durchstoßfestigkeit DS wurde gemäß ISO 6603-2/40120/C bei 23°C an Platten mit einer Dicke von 2 mm bestimmt.

Fließfähigkeit MVR [ml/10 min]:

Als Maß für die Fließfähigkeit wurde die Melt-Volume-Rate MVR 220/10 gemäß DIN EN ISO 1133 bestimmt.

Wärmeformbeständigkeit Vicat B50 [°C]:

Die Wärmeformbeständigkeit Vicat B50 wurde gemäß ISO 306: 1994 bestimmt.

Transmission [%]:

Die Transmission wurde gemäß DIN 53236 an Platten mit einer Dicke von 2 mm bestimmt.

Haze [%]:

Als Maß für die Trübung wurde der Haze-Wert gemäß ASTM D 1003 an Probekörpern mit einer Dicke von 2 mm bestimmt.

Yellowness-Index YI [dimensionslos]:

Der Gelbindex (Gelbstich) oder Yellowness-index YI wurde gemäß ASTM D 1925-70 C/10° bestimmt.

Teilchengröße $D_{50}$ bzw. $D_{90}$ [nm]:

Die mittlere Teilchengröße und die Teilchengrößenverteilung der Pfropfcopolymerisat-Kerne (C1) wurden aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $D_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $D_{50}$-Wert entspricht. Ebenso haben dann 50 Gew.-% der Teilchen einen größeren Durchmesser als der $D_{50}$-Wert. Der $D_{90}$-Wert ist als der Teilchendurchmesser definiert, bei dem 90 Gew.-% der Teilchen einen kleineren Durchmesser haben als der Durchmesser, der dem $D_{90}$-Wert entspricht.

Wasseraufnahme:

Aus den Formmassen wurden Probekörper hergestellt und 16 h bei 20°C, beziehungsweise 6 h bei 70 °C in Wasser gelagert. Das optische Erscheinungsbild der Probekörper wurde anschließend visuell beurteilt und einer der Kategorien "sehr gut" (++), "gut" (+), "ausreichend" (o), "schlecht" (-) oder "sehr schlecht" (--) zugeordnet.

Chemikalienbeständigkeit:

Aus den Formmassen wurden Probekörper hergestellt und in verschiedenen Medien (Ethanol, Isopropanol, Olivenöl-Ölsäure-Gemisch oder Di-iso-dodecylphthalat) gelagert. An den Probekörpern wurden jeweils vor und nach der Lagerung das Spannungsrißverhalten (gemessen nach ISO 4600-1992, Verfahren B, Kugeleindruckprüfung) sowie Festigkeit, Steifigkeit und Bruchdehnung (gemessen nach Zugversuch ISO 527, Reißdehnung) bestimmt. Die durch die Lagerung verursachte jeweilige Veränderung der gemessenen Eigenschaften wurde beurteilt und einer der Kategorien "sehr gut" (++), "gut" (+), "ausreichend" (o), "schlecht" (-) oder "sehr schlecht" (--) zugeordnet.

Herstellung der Formmassen:

Als Komponente A wurde ein Copolymerisat aus 95,5 Gew.-% Methylmethacrylat und 4,5 Gew.-% Methylacrylat mit einer Viskositätszahl VZ von 70 ml/g eingesetzt (bestimmt als 0,5 gew.%-ige Lösung in Dimethylformamid bei 23°C nach DIN 53727).

Als Komponente B wurde ein Copolymerisat aus 81 Gew.-% Styrol und 19 Gew.-% Acrylnitril mit einer Viskositätszahl VZ von 60 ml/g eingesetzt (bestimmt als 0,5 gew.-%-ige Lösung in Dimethylformamid bei 23°C nach DIN 53727).

Die Komponenten C wurden wie folgt hergestellt:

In einer ersten Stufe wurden Pfropfkerne C1 hergestellt, indem jeweils eine Lösung aus 186 Gew.-Teilen Wasser, 0,36 Gew.-Teilen Natriumbicarbonat, 0,30 Gew.-Teilen Kaliumperoxodisulfat und 0,55 Gew.-Teilen Kaliumstearat zunächst mit Stickstoff inertisiert und auf 70°C temperiert wurde. Anschließend wurden unter Rühren innerhalb von 5 h eine Mischung aus 1 Gew.-Teil tert.-Dodecylmercaptan und 100 Gew.-Teilen einer Mischung aus Butadien und Styrol (die jeweilige Zusammensetzung der Butadien-Styrol-Mischung ist Tabelle 1 zu entnehmen) zugegeben. Man polymerisierte bis zu einem Umsatz von mindestens 95 %.
Die so aus 73 Gew.-% Butadien und 27 Gew.-% Styrol erhaltenen Pfropfkerne C1 wiesen einen mittleren Teilchendurchmesser $D_{50}$ von 130 nm und einen Quellungsindex QI von 23 auf.
Die so aus 70 Gew.-% Butadien und 30 Gew.-% Styrol erhaltenen Pfropfkerne C1 wiesen einen mittleren Teilchendurchmesser $D_{50}$ von 140 nm und einen Quellungsindex QI von 31 auf.
Für Formmasse V4 (s. Tabelle 1) wurde das beschriebene Vorgehen zur Herstellung des Pfropfkerns C1 gemäß der Lehre von WO 01/46317 so abgewandelt, daß Pfropfkerne mit einer bimodalen Teilchengrößenverteilung gebildet wurden; die Maxima der Teilchengrößenverteilung lagen bei 80 und 150 nm.
Aus den in der ersten Stufe erhaltenen Reaktionsmischungen enthaltend die Pfropfkerne C1 wurden jeweils durch zweistufige Pfropfcopolymerisation in der nachfolgend beschriebenen Weise die Pfropfcopolymerisate C hergestellt.
Dabei wurden folgende Abkürzungen verwendet.

| Bu | Butadien | MA | Methylacrylat |
| S | Styrol | BDDA | Butandioldiacrylat |
| MMA | Methylmethacrylat | BA | Butylacrylat |
| BGDMA | Butylenglykoldimethacrylat | DCPA | Dihydrodicyclopentadienylacrylat |

Die Reaktionsmischung enthaltend jeweils die in Tabelle 1 angegebenen Gew.-teile Pfropfkerne C1 wurde vorgelegt und mit Stickstoff inertisiert. Anschließend fügte man jeweils 0,1 Gew.-Teile Kaliumstearat und 0,04 Gew.-Teile Kaliumperoxodisulfat in 10 Gew.-Teilen Wasser hinzu. Diese Mischung wurde jeweils bei 70°C innerhalb von 1,5 h mit den in Tabelle 1 wiedergegebenen Gew.-teilen einer Mischung der die erste Pfropfhülle C2 aufbauenden Monomere versetzt, wobei die letztgenannte Mischung jeweils aus den in Tabelle 1 genannten Gew.-teilen S, MMA, DCPA, BDDA und BGDMA bestand. Nach Zulaufende wurde die Polymerisation zum Aufbau der ersten Pfropfhülle C2 15 min fortgesetzt.
Zu den so erhaltenen Reaktionsmischungen wurden jeweils innerhalb von 1,5 h die in Tabelle 1 wiedergegebenen Gew.-teile einer Mischung der die zweite Pfropfhülle C3 aufbauenden Monomere zugegeben, wobei die letztgenannte Mischung jeweils aus den in Tabelle 1 genannten Gew.-teilen MMA und BA bestand. Die Polymerisation wurde zum Aufbau der zweiten Pfropfhülle C3 anschließend 60 Minuten lang fortgesetzt. Anschließend fügte man jeweils weitere 0,04 Gew.-Teile Kaliumperoxodisulfat in 10 Gew.-Teilen Wasser hinzu und polymerisierte 1,5 h nach.
Die so erhaltenen Pfropfcopolymerisate C wurden danach durch Fällung mit einer 1 gew.-%igen Magnesiumsulfatlösung isoliert und nach dem Waschen mit Wasser bei 60°C im Vakuum 24 Stunden lang getrocknet.
Aus den in Tabelle 1 angegebenen Gew.-teilen der Komponenten A, B, C, und jeweils 0,2 Gew.-teilen Calciumstearat wurden in einer Schmelze bei Temperaturen von 250°C die in Tabelle 1 wiedergegeben erfindungsgemäßen Formmassen 1-4 und die zum Vergleich dienenden Formmassen V1-V4 hergestellt.

Tabelle 1:

| Formmasse***** | A* | B* | C* | Zusammensetzung C | | | | | | |
|---|---|---|---|---|---|---|---|---|---|---|
| | | | | C1** | Zusammensetzung C1*** | C2** | Zusammensetzung C2*** | C3* * | Zusammensetzung C3*** |
| 1 | 35,4 | 37,4 | 27 | 80 | 73 Bu - 27 S | 10 | 32,7 S - 65,3 MMA -2 DCPA | 10 | 85 MMA -15 BA |
| 2 | 34,8 | 38,0 | 27 | 80 | 70 Bu - 30 S | 10 | 30 S - 68 MMA - 2 DCPA | 10 | 85 MMA - 15 BA |
| 3 | 36,5 | 34,8 | 28,5 | 75 | 73 Bu - 27 S | 15 | 30,7 S - 67,3 MMA - 2 DCPA | 10 | 80 MMA - 20 BA |
| 4 | 35,5 | 34,3 | 30 | 70 | 70 Bu - 30 S | 15 | 35 S - 63 MMA -2 DCPA | 15 | 90 MMA - 10 BA |
| V1 | 34,9 | 37,9 | 27 | 80 | 73 Bu - 27 S | 10 | 52 S - 47 MMA -1 BDDA | 10 | 80 MMA - 20 BA |
| V2 | 34,9 | 37,9 | 27 | 80 | 73 Bu - 27 S | 10 | 51,5 S - 46,5 MMA -2 DCPA | 10 | 80 MMA - 20 BÄ |
| V3 | 35,0 | 37,8 | 27 | 80 | 73 Bu - 27 S | 10 | 51,5 S - 46,5 MMA -2 BDDA | 10 | 80 MMA - 20 BA |
| V4**** | 34,4 | 38,4 | 27 | 80 | 70 Bu - 30 S | 10 | 40 S - 58 MMA -2 BGDMA | 10 | 80 MMA - 20 BA |

* Gew.-teile der Komponenten A, B und C, aus denen die Formmassen bestehen (jede Formmasse enthält außerdem 0,2 Gew.-teile Calciumstearat), wobei sich die Summe der Gew.-teile von A, B, C und Calciumstearat zu 100 addiert.

** Gew.-teile der Komponenten C1, C2 und C3, aus denen die Pfropfcopolymerisate C bestehen, wobei sich die Summe der Gew.-teile C1, C2 und C3 zu 100 addiert.

*** Gew.-teile und Art der Monomere, aus denen die jeweiligen Komponenten C1, C2 und C3 bestehen, wobei sich die jeweilige Summe der Monomeren zu 100 addiert (Bu = 1,3-Butadien, MA = Methylacrylat, S = Styrol, BDDA = Butandioldiacrylat, MMA = Methylmethacrylat, BA = Butylacrylat, BGDMA = Butylenglykoldimethacrylat, DCPA = Dihydrodicyclopentadienylacrylat) **** Pfropfcopolymerisat-Kern C1 mit bimodaler Teilchengrößenverteilung ***** mit V gekennzeichnete Formmassen sind nicht erfindungsgemäß und dienen zum Vergleich.

EP 1 697 458 B1

Die Komponenten (A) und (B) bildeten die Matrix der Formmassen, die Komponente (C) stellte den Kautschuk dar.

In der nachfolgenden Tabelle 2 sind für die erfindungsgemäßen Formmassen 1 bis 4 und für die zum Vergleich dienenden Formmassen V1 bis V4 das jeweilige Verhältnis der Gewichtsteile (C2):(C3), die Brechungsindices ($n_D$-$C_2$) der ersten Pfropfhülle (C2), die Brechungsindices ($n_D$-$C_3$) der zweiten Pfropfhülle (C3) und die Brechungsindices ($n_D$-$C_2C_3$) der Gesamtpfropfhülle sowie die Brechungsindices ($n_D$-$C_1$) der Kerne (C1) und die Brechungsindices ($n_D$-C) der Gesamtkomponenten (C) aufgeführt. Die Beträge der jeweiligen Differenzen aus den Brechungsindices ($n_D$-C) der Gesamtkomponenten (C) und den Brechungsindices ($n_D$-AB) der Gesamtmatrix der Komponenten (A) und (B) sind für alle Formmassen 1 bis 4 und V1 bis V4 kleiner als 0,02.

Tabelle 2

| Formmasse ***** | (C2):(C3) | ($n_D$-$C_2$) | ($n_D$-$C_3$) | ($n_D$-$C_2C_3$) | ($n_D$-$C_1$) | ($n_D$-C) |
|---|---|---|---|---|---|---|
| | | | | | | |
| 1 | 10/10 | 1,5274 | 1,4836 | 1,5055 | 1,5403 | 1,5340 |
| 2 | 10/10 | 1,5247 | 1,4836 | 1,5042 | 1,5426 | 1,5351 |
| 3 | 15/10 | 1,5254 | 1,4798 | 1,5072 | 1,5403 | 1,5311 |
| 4 | 15/15 | 1,5297 | 1,4874 | 1,5085 | 1,5426 | 1,5329 |
| V1 | 10/10 | 1,5457 | 1,4798 | 1,5128 | 1,5403 | 1,5336 |
| V2 | 10/10 | 1,5460 | 1,4798 | 1,5129 | 1,5403 | 1,5353 |
| V3 | 10/10 | 1,5445 | 1,4798 | 1,5121 | 1,5403 | 1,5355 |
| V4 | 10/10 | 1,5331 | 1,4798 | 1,5064 | 1,5426 | 1,5342 |
| ***** mit V gekennzeichnete Formmassen sind nicht erfindungsgemäß und dienen zum Vergleich. | | | | | | |

In der nachfolgenden Tabelle 3 sind sowohl für die erfindungsgemäßen Formmassen 1 bis 4 als auch für die zum Vergleich dienenden Formmassen V1 bis V4 die mechanischen, rheologischen und optischen Eigenschaften sowie die Chemikalienbeständigkeit wiedergegeben.

Tabelle 3:

| Formmasse | 1 | 2 | 3 | 4 | V1 | V2 | V3 | V4 |
|---|---|---|---|---|---|---|---|---|
| $a_n$ [kJ/m$^2$] | 103,5 | 99,8 | 117,0 | 123,0 | 103,2 | 107,5 | 101,5 | 84,2 |
| $a_k$ [kJ/m$^2$] | 14,6 | 15,9 | 16,3 | 15,3 | 9,7 | 10,7 | 12,6 | 8,3 |
| Durchstoßfestigkeit DS [Nm] | 16,6 | 17,6 | 16,2 | 18,7 | 16,0 | 13,4 | 10,4 | 16,5 |
| MVR [ml/10 min] | 14,6 | 10,1 | 11,0 | 12,1 | 10,5 | 12,5 | 11,3 | 10,7 |
| Vicat B50 [˚C] | 95,4 | 94,2 | 92,0 | 90,8 | 91,3 | 93,4 | 92,1 | 91,1 |
| Transmission [%] | 87,3 | 85,5 | 87,7 | 86,4 | 84,1 | 85,3 | 85,4 | 82,4 |
| Haze [%] | 6,3 | 8,4 | 7,8 | 8,7 | 8,9 | 8,1 | 9,3 | 15,2 |
| Yellowness YI | 6,9 | 8,2 | 9,4 | 9,8 | 10,2 | 9,4 | 10,7 | 17,7 |
| Wasserlagerung 20˚C 16h * | + | + | + | + | ○ | ○ | ○ | ○ |
| Wasserlagerung 70˚C 6h * | ○ | ○ | ○ | ○ | ○ | ○ | ○ | - |
| Chemikalienbeständigkeit Ethanol * | ++ | ++ | ++ | + | ○ | ○ | ○ | ○ |
| Chemikalienbeständigkeit Isopropanol * | ++ | ++ | ++ | + | - | ○ | ○ | ○ |
| Chemikalienbeständigkeit Olivenöl/Ölsäure * | ++ | ++ | ++ | + | -- | - | - | - |

(fortgesetzt)

| Formmasse | 1 | 2 | 3 | 4 | V1 | V2 | V3 | V4 |
|---|---|---|---|---|---|---|---|---|
| Chemikalienbeständigkeit Di-iso-dodecylphthalat* | ++ | ++ | ++ | + | - | - | - | - |
| * ++ sehr gut, + gut, ○ ausreichend, - schlecht, - sehr schlecht | | | | | | | | |

Die Beispiele belegen die bei vergleichbaren mechanischen, rheologischen und optischen Eigenschaften verbesserte Chemikalienbeständigkeit, beispielsweise Lösungsmittelbeständigkeit oder Wasseraufnahme, der erfindungsgemäßen thermoplastischen Formmassen gegenüber bekannten Formmassen.

## Patentansprüche

1. Thermoplastische Formmassen, enthaltend eine Mischung aus

(A) 30 bis 69 Gew.-%, bezogen auf die Summe der Komponenten (A), (B) und (C), eines Methylmethacrylat-Polymerisates, erhältlich durch Polymerisation einer Mischung, bestehend aus

(A1) 90 bis 100 Gew.-%, bezogen auf (A), Methylmethacrylat,und
(A2) 0 bis 10 Gew.-%, bezogen auf (A), eines $C_1$-$C_8$-Alkylesters der Acrylsäure, und

(B) 30 bis 69 Gew.-%, bezogen auf die Summe der Komponenten (A), (B) und (C), eines Copolymerisates, erhältlich durch Polymerisation einer Mischung, bestehend aus

(B1) 75 bis 88 Gew.-%, bezogen auf (B), eines vinylaromatischen Monomeren und
(B2) 12 bis 25 Gew.-%, bezogen auf (B), eines Vinylcyanids

und
(C) 1 bis 40 Gew.-%, bezogen auf die Summe der Komponenten (A), (B) und (C), eines Pfropfcopolymerisates, erhältlich aus

(C1) 60 bis 90 Gew.-%, bezogen auf (C), eines Kerns, erhältlich durch Polymerisation eines Monomerengemisches, bestehend aus

(C11) 65 bis 90 Gew.-%, bezogen auf (C1), eines 1,3-Diens und
(C12) 10 bis 35 Gew.-% bezogen auf (C1), eines vinylaromatischen Monomeren

und
(C2) 5 bis 20 Gew.-%, bezogen auf (C), einer ersten Pfropfhülle, und
(C3) 5 bis 20 Gew.-%, bezogen auf (C), einer zweiten Pfropfhülle, erhältlich durch Polymerisation eines Monomerengemisches, bestehend aus

(C31) 70 bis 98 Gew.-%, bezogen auf (C3), eines $C_1$-$C_8$-Alkylesters der Methacrylsäure und
(C32) 2 bis 30 Gew.-%, bezogen auf (C3), eines $C_1$-$C_8$-Alkylesters der Acrylsäure,

und
(D) gegebenenfalls üblichen Zusatzstoffen in Mengen von bis zu 20 Gew.-%, bezogen auf die Summe der Komponenten (A), (B) und (C),
mit der Maßgabe, daß das Gewichtsverhältnis von (C2) zu (C3) im Bereich von 2:1 bis 1:2 liegt,
**dadurch gekennzeichnet, daß** die erste Pfropfhülle (C2) erhältlich ist durch Polymerisation eines Monomerengemisches, bestehend aus

(C21) 30 bis 39 Gew.-%, bezogen auf (C2), eines vinylaromatischen Monomeren
(C22) 61 bis 70 Gew.-%, bezogen auf (C2), eines $C_1$-$C_8$-Alkylesters der Methacrylsäure und
(C23) 0 bis 3 Gew.-%, bezogen auf (C2), eines vernetzenden Monomeren.

**2.** Thermoplastische Formmassen nach Anspruch 1, **dadurch gekennzeichnet, daß** der Brechungsindex ($n_D$-$C_2$) der ersten Pfropfhülle (C2) größer als der Brechungsindex ($n_D$-$C_3$) der zweiten Pfropfhülle (C3) ist, und der Brechungsindex ($n_D$-$C_2C_3$) der Gesamtpfropfhülle kleiner als der Brechungsindex ($n_D$-$C_1$) des Kerns (C1) ist, und der Betrag der Differenz aus Brechungsindex ($n_D$-C) der Gesamtkomponente (C) und dem Brechungsindex ($n_D$-AB) der Gesamtmatrix der Komponenten (A) und (B) kleiner oder gleich 0,02 ist, wobei die Brechungsindices jeweils nach den in der Beschreibung genannten Methoden bestimmt werden.

**3.** Thermoplastische Formmassen nach Anspruch 1 oder 2, **dadurch gekennzeichnet, daß** die erste Pfropfhülle (C2) erhältlich ist durch Polymerisation eines Monomerengemisches, bestehend aus

(C21) 30 bis 35 Gew.-%, bezogen auf (C2), eines vinylaromatischen Monomeren
(C22) 63 bis 70 Gew.-%, bezogen auf (C2), eines $C_1$-$C_8$-Alkylesters der Methacrylsäure und
(C23) 0 bis 2 Gew.-%, bezogen auf (C2), eines vernetzenden Monomeren.

**4.** Thermoplastische Formmassen nach einem der Ansprüche 1 bis 3, **dadurch gekennzeichnet, daß** die erste Pfropfhülle (C2) erhältlich ist durch Polymerisation eines Monomerengemisches, bestehend aus

(C21) 31 bis 35 Gew.-%, bezogen auf (C2), eines vinylaromatischen Monomeren
(C22) 63 bis 68 Gew.-%, bezogen auf (C2), eines $C_1$-$C_8$-Alkylesters der Methacrylsäure und
(C23) 1 bis 2 Gew.-%, bezogen auf (C2), eines vernetzenden Monomeren.

**5.** Thermoplastische Formmassen nach einem der Ansprüche 1 bis 4, worin der Betrag der Differenz zwischen dem Brechungsindex ($n_D$-$C_2C_3$) der Gesamtpfropfhülle des Pfropfcopolymerisats C und dem Brechungsindex ($n_D$-$C_1$) des Kerns (C1) kleiner als 0,06 ist, wobei die Brechungsindices jeweils nach den in der Beschreibung genannten Methoden bestimmt werden.

**6.** Thermoplastische Formmassen nach einem der Ansprüche 1 bis 5, wobei als vinylaromatisches Monomeres Styrol verwendet wird.

**7.** Thermoplastische Formmassen nach einem der Ansprüche 1 bis 6, wobei das Pfropfcopolymerisat (C) einen Quellungsindex QI von 10 bis 40 aufweist, wobei der Quellungsindex QI nach der in der Beschreibung genannten Methoden bestimmt wird.

**8.** Verfahren zur Herstellung der thermoplastischen Formmassen gemäß einem der Ansprüche 1 bis 7, **dadurch gekennzeichnet, daß** man

(A) 30 bis 69 Gew.-%, bezogen auf die Summe der Komponenten (A), (B) und (C), eines Methylmethacrylat-Polymerisates, erhältlich durch Polymerisation einer Mischung, bestehend aus

(A1) 90 bis 100 Gew.-%, bezogen auf (A), Methylmethacrylat,und
(A2) 0 bis 10 Gew.-%, bezogen auf (A), eines $C_1$-$C_8$-Alkylesters der Acrylsäure, und

(B) 30 bis 69 Gew.-%, bezogen auf die Summe der Komponenten (A), (B) und (C), eines Copolymerisates, erhältlich durch Polymerisation einer Mischung, bestehend aus

(B1) 75 bis 88 Gew.-%, bezogen auf (B), eines vinylaromatischen Monomeren und
(B2) 12 bis 25 Gew.-%, bezogen auf (B), eines Vinylcyanids

und
(C) 1 bis 40 Gew.-%, bezogen auf die Summe der Komponenten (A), (B) und (C), eines Pfropfcopolymerisates, erhältlich aus

(C1) 60 bis 90 Gew.-%, bezogen auf (C), eines Kerns, erhältlich durch Polymerisation eines Monomerengemisches, bestehend aus

(C11) 65 bis 90 Gew.-%, bezogen auf (C1), eines 1,3-Diens und
(C12) 10 bis 35 Gew.-% bezogen auf (C1), eines vinylaromatischen Monomeren

und

(C2) 5 bis 20 Gew.-%, bezogen auf (C), einer ersten Pfropfhülle, erhältlich durch Polymerisation eines Monomerengemisches, bestehend aus

(C21) 30 bis 39 Gew.-%, bezogen auf (C2), eines vinylaromatischen Monomeren
(C22) 61 bis 70 Gew.-%, bezogen auf (C2), eines $C_1$-$C_8$-Alkylesters der Methacrylsäure und
(C23) 0 bis 3 Gew.-%, bezogen auf (C2), eines vernetzenden Monomeren.

und

(C3) 5 bis 20 Gew.-%, bezogen auf (C), einer zweiten Pfropfhülle, erhältlich durch Polymerisation eines Monomerengemisches, bestehend aus

(C31) 70 bis 98 Gew.-%, bezogen auf (C3), eines $C_1$-$C_8$-Alkylesters der Methacrylsäure und
(C32) 2 bis 30 Gew.-%, bezogen auf (C3), eines $C_1$-$C_8$-Alkylesters der Acrylsäure,

und

(D) gegebenenfalls üblichen Zusatzstoffen in Mengen von bis zu 20 Gew.-%, bezogen auf die Summe der Komponenten (A), (B) und (C),

mit der Maßgabe, daß das Gewichtsverhältnis von (C2) zu (C3) im Bereich von 2:1 bis 1:2 liegt,
die Komponenten (A), (B), (C) und gegebenenfalls (D) in der Schmelze vermischt.

9. Verwendung der thermoplastischen Formmassen gemäß einem der Ansprüche 1 bis 7 zur Herstellung von Formkörpern.

10. Formkörper, enthaltend thermoplastische Formmassen gemäß einem der Ansprüche 1 bis 7.


**Claims**

1. A thermoplastic molding composition, comprising a mixture of

(A) from 30 to 69% by weight, based on the sum of components (A), (B) and (C), of a methyl methacrylate polymer obtainable by polymerizing a mixture consisting of

(A1) from 90 to 100% by weight, based on (A), of methyl methacrylate, and
(A2) from 0 to 10% by weight, based on (A), of a $C_1$-$C_8$-alkyl ester of acrylic acid, and

(B) from 30 to 69% by weight, based on the sum of components (A), (B) and (C), of a copolymer obtainable by polymerizing a mixture consisting of

(B1) from 75 to 88% by weight, based on (B), of a styrenic monomer and
(B2) from 12 to 25% by weight, based on (B), of a vinyl cyanide

and
(C) from 1 to 40% by weight, based on the sum of components (A), (B) and (C), of a graft copolymer obtainable from

(C1) from 60 to 90% by weight, based on (C), of a core obtainable by polymerizing a monomer mixture consisting of

(C11) from 65 to 90% by weight, based on (C1), of a 1,3-diene and
(C12) from 10 to 35% by weight, based on (C1), of a styrenic monomer

and
(C2) from 5 to 20% by weight, based on (C), of a first graft shell and
(C3) from 5 to 20% by weight, based on (C), of a second graft shell obtainable by polymerizing a monomer mixture consisting of

(C31) from 70 to 98% by weight, based on (C3), of a $C_1$-$C_8$-alkyl ester of methacrylic acid and
(C32) from 2 to 30% by weight, based on (C3), of a $C_1$-$C_8$-alkyl ester of acrylic acid

and
(D) if appropriate, customary additives in amounts of up to 20% by weight, based on the sum of components (A), (B) and (C),

with the proviso that the weight ratio of (C2) to (C3) is in the range from 2:1 to 1:2,
wherein the first graft shell (C2) is obtainable by polymerizing a monomer mixture consisting of

(C21) from 30 to 39% by weight, based on (C2), of a styrenic monomer,
(C22) from 61 to 70% by weight, based on (C2), of a $C_1$-$C_8$-alkyl ester of methacrylic acid and
(C23) from 0 to 3% by weight, based on (C2), of a crosslinking monomer.

2. The thermoplastic molding composition according to claim 1, wherein the refractive index ($n_D$-$C_2$) of the first graft shell (C2) is greater than the refractive index ($n_D$-$C_3$) of the second graft shell (C3), and the refractive index ($n_D$-$C_2C_3$) of the overall graft shell is less than the refractive index ($n_D$-$C_1$) of the core (C1), and the magnitude of the difference of the refractive index ($n_D$-C) of the overall component (C) and the refractive index ($n_D$-AB) of the overall matrix of components (A) and (B) is less than or equal to 0.02, the refractive indices each being determined by the methods specified in the description.

3. The thermoplastic molding composition according to claim 1 or 2, wherein the first graft shell (C2) is obtainable by polymerizing a monomer mixture consisting of

(C21) from 30 to 35% by weight, based on (C2), of a styrenic monomer,
(C22) from 63 to 70% by weight, based on (C2), of a $C_1$-$C_8$-alkyl ester of methacrylic acid and
(C23) from 0 to 2% by weight, based on (C2), of a crosslinking monomer.

4. The thermoplastic molding composition according to any of claims 1 to 3, wherein the first graft shell (C2) is obtainable by polymerizing a monomer mixture consisting of

(C21) from 31 to 35% by weight, based on (C2), of a styrenic monomer,
(C22) from 63 to 68% by weight, based on (C2), of a $C_1$-$C_8$-alkyl ester of methacrylic acid and
(C23) from 1 to 2% by weight, based on (C2), of a crosslinking monomer.

5. The thermoplastic molding composition according to any of claims 1 to 4, wherein the magnitude of the difference between the refractive index ($n_D$-$C_2C_3$) of the overall graft shell of the graft copolymer C and the refractive index ($n_D$-$C_1$) of the core (C1) is less than 0.06, the refractive indices each being determined by the methods specified in the description.

6. The thermoplastic molding composition according to any of claims 1 to 5, wherein the styrenic monomer used is styrene.

7. The thermoplastic molding composition according to any of claims 1 to 6, wherein the graft copolymer (C) has a swelling index SI of from 10 to 40, the swelling index SI being determined by the methods specified in the description.

8. A process for producing thermoplastic molding compositions according to any of claims 1 to 7, which comprises

(A) from 30 to 69% by weight, based on the sum of components (A), (B) and (C), of a methyl methacrylate polymer obtainable by polymerizing a mixture consisting of

(A1) from 90 to 100% by weight, based on (A), of methyl methacrylate, and
(A2) from 0 to 10% by weight, based on (A), of a $C_1$-$C_8$-alkyl ester of acrylic acid, and

(B) from 30 to 69% by weight, based on the sum of components (A), (B) and (C), of a copolymer obtainable by polymerizing a mixture consisting of

(B1) from 75 to 88% by weight, based on (B), of a styrenic monomer and

(B2) from 12 to 25% by weight, based on (B), of a vinyl cyanide

and
(C) from 1 to 40% by weight, based on the sum of components (A), (B) and (C), of a graft copolymer obtainable from

(C1) from 60 to 90% by weight, based on (C), of a core obtainable by polymerizing a monomer mixture consisting of

(C11) from 65 to 90% by weight, based on (C1), of a 1,3-diene and
(C12) from 10 to 35% by weight, based on (C1), of a styrenic monomer

and
(C2) from 5 to 20% by weight, based on (C), of a first graft shell obtainable by polymerizing a monomer mixture consisting of

(C21) from 30 to 39% by weight, based on (C2), of a styrenic monomer,
(C22) from 61 to 70% by weight, based on (C2), of a $C_1$-$C_8$-alkyl ester of methacrylic acid and
(C23) from 0 to 3% by weight, based on (C2), of a crosslinking monomer

and
(C3) from 5 to 20% by weight, based on (C), of a second graft shell obtainable by polymerizing a monomer mixture consisting of

(C31) from 70 to 98% by weight, based on (C3), of a $C_1$-$C_8$-alkyl ester of methacrylic acid and
(C32) from 2 to 30% by weight, based on (C3), of a $C_1$-$C_8$-alkyl ester of acrylic acid

and
(D) if appropriate, customary additives in amounts of up to 20% by weight, based on the sum of components (A), (B) and (C),

with the proviso that the weight ratio of (C2) to (C3) is in the range from 2:1 to 1:2,
mixing components (A), (B), (C) and, where present, (D) in the melt.

9. The use of the thermoplastic molding composition according to any of claims 1 to 7 for producing moldings.

10. A molding comprising the thermoplastic molding composition according to any of claims 1 to 7.

**Revendications**

1. Masses de moulage thermoplastiques contenant un mélange de :

(A) 30 à 69% en poids, par rapport à la somme des composants (A), (B) et (C), d'un polymère de méthacrylate de méthyle que l'on peut obtenir par polymérisation d'un mélange constitué de :

(A1) 90 à 100% en poids, par rapport au composant (A), de méthacrylate de méthyle, et
(A2) 0 à 10% en poids, par rapport au composant (A), d'un ester d'alkyle en $C_1$-$C_8$ de l'acide acrylique, et

(B) 30 à 69% en poids, par rapport à la somme des composants (A), (B) et (C), d'un copolymère que l'on peut obtenir par polymérisation d'un mélange constitué de :

(B1) 75 à 88% en poids, par rapport au composant (B), d'un monomère vinylaromatique, et
(B2) 12 à 25% en poids, par rapport au composant (B), d'un cyanure de vinyle, et

(C) 1 à 40% en poids, par rapport à la somme des composants (A), (B) et (C), d'un copolymère greffé que l'on peut obtenir à partir de :

(C1) 60 à 90% en poids, par rapport au composant (C), d'un noyau que l'on peut obtenir par polymérisation d'un mélange de monomères constitué de :

(C11) 65 à 90% en poids, par rapport au composant (C1), d'un 1,3-diène, et
(C12) 10 à 35% en poids, par rapport au composant (C1), d'un monomère vinylaromatique, et

(C2) 5 à 20% en poids, par rapport au composant (C), d'une première enveloppe greffée, et
(C3) 5 à 20% en poids, par rapport au composant (C), d'une seconde enveloppe greffée que l'on peut obtenir par polymérisation d'un mélange de monomères constitué de :

(C31) 70 à 98% en poids, par rapport au composant (C3), d'un ester d'alkyle en $C_1$-$C_8$ de l'acide méthacrylique, et
(C32) 2 à 30% en poids, par rapport au composant (C3), d'un ester d'alkyle en $C_1$-$C_8$ de l'acide acrylique, et

(D) éventuellement, d'additifs courants en quantités jusqu'à 20% en poids par rapport à la somme des composants (A), (B) et (C),

à condition que le rapport pondéral du composant (C2) au composant (C3) se situe dans la plage de 2:1 à 1:2, **caractérisées en ce que** l'on peut obtenir la première enveloppe greffée (C2) par polymérisation d'un mélange de monomères, constitué de :

(C21) 30 à 39% en poids, par rapport au composant (C2), d'un monomère vinylaromatique,
(C22) 61 à 70% en poids, par rapport au composant (C2), d'un ester d'alkyle en $C_1$-$C_8$ de l'acide méthacrylique, et
(C23) 0 à 3% en poids, par rapport au composant (C2), d'un monomère de réticulation.

2. Masses de moulage thermoplastiques selon la revendication 1, **caractérisées en ce que** l'indice de réfraction ($n_D$-$C_2$) de la première enveloppe greffée (C2) est supérieur à l'indice de réfraction ($n_D$-$C_3$) de la seconde enveloppe greffée (C3), **en ce que** l'indice de réfraction ($n_D$-$C_2C_3$) de la totalité de l'enveloppe greffée est inférieur à l'indice de réfraction ($n_D$-$C_1$) du noyau (C1) et **en ce que** la valeur de la différence de l'indice de réfraction ($n_D$-C) de l'ensemble des composants (C) et de l'indice de réfraction ($n_D$-AB) de la totalité de la matrice des composants (A) et (B) est inférieure ou égale à 0,02, les indices de réfraction étant déterminés respectivement selon les procédés mentionnés dans la description.

3. Masses de moulage thermoplastiques selon la revendication 1 ou 2, **caractérisées en ce que** l'on peut obtenir la première enveloppe greffée (C2) par polymérisation d'un mélange de monomères, constitué de :

(C21) 30 à 35% en poids, par rapport au composant (C2), d'un monomère vinylaromatique,
(C22) 63 à 70% en poids, par rapport au composant (C2), d'un ester d'alkyle en $C_1$-$C_8$ de l'acide méthacrylique, et
(C23) 0 à 2% en poids, par rapport au composant (C2), d'un monomère de réticulation.

4. Masses de moulage thermoplastiques selon l'une quelconque des revendications 1 à 3, **caractérisées en ce que** l'on peut obtenir la première enveloppe greffée (C2) par polymérisation d'un mélange de monomères constitué de :

(C21) 31 à 35% en poids, par rapport au composant (C2), d'un monomère vinylaromatique,
(C22) 63 à 68% en poids, par rapport au composant (C2), d'un ester d'alkyle en $C_1$-$C_8$ de l'acide méthacrylique, et
(C23) 1 à 2% en poids, par rapport au composant (C2), d'un monomère de réticulation.

5. Masses de moulage thermoplastiques selon l'une quelconque des revendications 1 à 4, dans lesquelles la valeur de la différence entre l'indice de réfraction ($n_D$-$C_2C_3$) de la totalité de l'enveloppe greffée du copolymère greffé C et l'indice de réfraction ($n_D$-$C_1$) du noyau (C1) est inférieure à 0,06, les indices de réfraction étant déterminés respectivement selon les procédés mentionnés dans la description.

6. Masses de moulage thermoplastiques selon l'une quelconque des revendications 1 à 5, dans lesquelles on utilise le styrène comme monomère vinylaromatique.

7. Masses de moulage thermoplastiques selon l'une quelconque des revendications 1 à 6, dans lesquelles le copolymère greffé (C) présente un indice de gonflement QI de 10 à 40, l'indice de gonflement QI étant déterminé selon les procédés mentionnés dans la description.

8. Procédé de fabrication de masses de moulage thermoplastiques selon l'une quelconque des revendications 1 à 7, **caractérisé en ce que** l'on mélange :

(A) 30 à 69% en poids, par rapport à la somme des composants (A), (B) et (C), d'un polymère de méthacrylate de méthyle que l'on peut obtenir par polymérisation d'un mélange constitué de :

(A1) 90 à 100% en poids, par rapport au composant (A), de méthacrylate de méthyle, et
(A2) 0 à 10% en poids, par rapport au composant (A), d'un ester d'alkyle en $C_1$-$C_8$ de l'acide acrylique, et

(B) 30 à 69% en poids, par rapport à la somme des composants (A), (B) et (C), d'un copolymère que l'on peut obtenir par polymérisation d'un mélange constitué de :

(B1) 75 à 88% en poids, par rapport au composant (B), d'un monomère vinylaromatique, et
(P2) 12 à 25% en poids, par rapport au composant (B), d'un cyanure de vinyle, et

(C) 1 à 40% en poids, par rapport à la somme des composants (A), (B) et (C), d'un copolymère greffé que l'on peut obtenir à partir de :

(C1) 60 à 90% en poids, par rapport au composant (C), d'un noyau que l'on peut obtenir par polymérisation d'un mélange de monomères, constitué de :

(C11) 65 à 90% en poids, par rapport au composant (C1), d'un 1,3-diène, et
(C12) 10 à 35% en poids, par rapport au composant (C1), d'un monomère vinylaromatique, et

(C2) 5 à 20% en poids, par rapport au composant (C), d'une première enveloppe greffée que l'on peut obtenir par polymérisation d'un mélange de monomères constitué de :

(C21) 30 à 39% en poids, par rapport au composant (C2), d'un monomère vinylaromatique,
(C22) 61 à 70% en poids, par rapport au composant (C2), d'un ester d'alkyle en $C_1$-$C_8$ de l'acide méthacrylique, et
(C23) 0 à 3% en poids, par rapport au composant (C2), d'un monomère de réticulation, et

(C3) 5 à 20% en poids, par rapport au composant (C), d'une seconde enveloppe greffée que l'on peut obtenir par polymérisation d'un mélange de monomères constitué de :

(C31) 70 à 98% en poids, par rapport au composant (C3), d'un ester d'alkyle en $C_1$-$C_8$ de l'acide méthacrylique, et
(C32) 2 à 30% en poids, par rapport au composant (C3), d'un ester d'alkyle en $C_1$-$C_8$ de l'acide acrylique, et

(D) éventuellement des additifs courants en quantités jusqu'à 20% en poids par rapport à la somme des composants (A), (B) et (C),
à condition que le rapport pondéral du composant (C2) au composant (C3) se situe dans la plage de 2:1 à 1:2, les composants (A), (B), (C) et, éventuellement, (D) étant mélangés dans la masse fondue.

9. Utilisation des masses de moulage thermoplastiques selon l'une quelconque des revendications 1 à 7, pour la fabrication de corps de moulage.

10. Corps de moulage contenant des masses de moulage thermoplastiques selon l'une quelconque des revendications 1 à 7.